# EUROPEAN PATENT SPECIFICATION

(11) **EP 2 776 286 B1**
(45) Date of publication and mention of the grant of the patent: **08.08.2018**
(21) Application number: 12798003.5
(22) Date of filing: 31.10.2012
(51) Int. Cl.: B60R 16/02, H01B 7/36

(54) **HIGH VOLTAGE WIRE HARNESS FOR USE IN AUTOMOBILE**
HOCHSPANNUNGSKABELBAUM FÜR EIN KRAFTFAHRZEUG
FAISCEAU DE CÂBLES HAUTE TENSION POUR AUTOMOBILE

(30) Priority: 07.11.2011 JP 2011243010
(43) Date of publication of application: 17.09.2014
(73) Proprietor: Yazaki Corporation, Minato-ku Tokyo 108-8333 (JP)
(72) Inventor: INAO, Shinichi, Kosai-shi, Shizuoka 431-0431 (JP); TOYAMA, Eiichi, Kosai-shi, Shizuoka 431-0431 (JP)
(74) Representative: Grünecker Patent- und Rechtsanwälte PartG mbB
(86) International application number: PCT/JP2012/078901
(87) International publication number: WO 2013/069709

(56) References cited:
- EP-A2- 0 826 559
- WO-A1-2013/012077
- GB-A- 898 124
- GB-A- 898 124
- GB-A- 924 609
- GB-A- 924 609
- US-A1- 2009 107 694
- US-A1- 2009 107 694
- US-A1- 2011 005 110
- US-A1- 2011 005 110

## Description

### Technical Field

The invention relates to a high voltage wire harness for use in an automobile that includes a metallic tubular body.

### Background Art

A wire harness disclosed in PTL1 provided below is made up of three high voltage electric wires and three metallic protective pipes that accommodate and protect the respective three high voltage electric wires one by one. The high voltage electric wires are provided for connecting a motor mounted in a front side of a vehicle to an inverter mounted in a middle or rear side of the vehicle.

The wire harness is routed along an underfloor portion of the vehicle body that is an outside of a vehicle body frame. Therefore, the metallic protective pipes are formed so as to be able to protect the high voltage electric wires from hurled pebbles or splashed water. The metallic protective pipes also have an electromagnetic shielding function because they are made of metal as well as exhibiting rigidity for protecting the high voltage electric wires from hurled pebbles and splashed water and also preventing flection of the high voltage electric wires.

Manufacturing a wire harness includes inserting a high voltage electric wire into each of three straight metallic protective pipes and bending the metallic protective pipes along a routing path of the wire harness on the underfloor portion of the vehicle body. After being manufactured as mentioned above at a factory of a harness manufacturer, the wire harness is transported to an assembly factory of an automobile manufacturer, where the wire harness is installed in a predetermined location on a vehicle. Routing work is thus completed.

### Citation List

### Patent Literature

[PTL 1] Japanese Patent Publication No. JP-A-2004-224156

### Summary of Invention

### Technical Problem

An outer cladding of a wire harness including a high voltage electric wire must be painted in orange as means for awaking a worker to the fact that the wire harness includes a high voltage.

A metallic outer cladding member (a tubular body), such as a metallic protective pipe disclosed in PTL 1, has an orange-painted exterior surface, to thereby let a worker realize that the wire harness includes a high voltage.

Incidentally, what the inventors of the present patent application have in their minds is to protect a high voltage electric wire by use of a metallic tubular body made of; for instance, aluminum. In this case, however, the attempt encounters the following problems.

Specifically, painting in orange an exterior surface of the metallic tubular body made of aluminum requires first cleansing a surface (the exterior surface), surfacing the tubular body, priming the surface, providing the primed surface with an overcoat, and finally subjecting the tubular body to heat treatment. Accordingly, the inventors found a problem of a treatment process becoming longer and adding to cost.

Some paintings require use of an organic solvent, which raises a problem of a necessity for large-scale measures against VOCs and an increase in cost incurred by the measures. The VOCs stand for volatile organic compounds, and a solvent is pointed out as a specific example of the VOC. When the VOC is released into the environment, the VOC may cause pollution, or the like, which has been publicly known.

Moreover, letting the metallic tubular body pass through all of the foregoing treatment steps is of importance. If the tubular body is subjected to overcoating by bypassing; for instance, the surfacing treatment and the priming treatment, adhesion of the overcoat to an aluminum surface will become degraded, which will raise problems of influence on paint quality, such as partial repelling of paint and an uneven paint film. Needless to say, coating management is difficult.

In addition, if the surfacing treatment and the priming treatment; for instance, are omitted, a problem of paint coming off during bending of the metallic tubular body will arise.

When a clamp; for instance, is used for anchoring the metallic tubular body to a predetermined location, difficulty in managing the paint film, such as that mentioned above, affects a configuration design of the clamp, which raises a problem of a cost increase.

The invention has been conceived in light of the circumstance, and a challenge to be met by the invention is to provide a high voltage wire harness for use in an automobile which is intended for awaking a worker to the fact that the wire harness includes a high voltage and which enables simplification of the processing steps, cost cutting, and quality enhancement.

### Solution to Problem

This object is solved by the subject matter of claim 1. In the invention having such a characteristic, the high voltage recognition component is retrofitted to the exterior surface side of the metallic tubular body in order to let the worker recognize that the wire harness includes a high voltage. The high voltage recognition component is painted in a color that enables recognition of the fact that the wire harness includes a high voltage; specifically, a currently specified orange color. The high voltage recognition component to be retrofitted is used as described in connection with the invention, whereby the high voltage recognition component can be attached after the metallic tubular body has been subjected to processing. Moreover, a necessity for providing the metallic tubular body with paint for letting the worker recognize that the wire harness includes a high voltage is obviated by use of the high voltage recognition component to be retrofitted. This also obviates a necessity for managing a coating film. Therefore, a configuration design of an anchoring member used at the time of anchoring a metallic tubular body; for instance, a clamp, can be facilitated remarkably. Moreover, a necessity for managing the coating film is obviated by use of the high voltage recognition component to be retrofitted, so that overall management can be made very simple. Further, processing steps and facilities can be simplified by use of a high voltage recognition component to be retrofitted when compared with; for instance, a case where painting is performed. Moreover, repelling of paint or occurrence of an uneven paint can be prevented because painting is not performed. Therefore, a good appearance can also be sufficiently assured.

In the high voltage wire harness for use in an automobile, the metallic tubular body may be bent, to form bends and a linear portion; and the high voltage recognition component is retrofitted to the linear portion.

In the invention having the characteristics mentioned above, the high voltage recognition component can be retrofitted to the linear portion of the metallic tubular body. Hence, when compared with the case where the high voltage recognition component is installed on the bend, the structure of the high voltage recognition component can be simplified.

In the high voltage wire harness for use in an automobile, the high voltage recognition component may be placed in agreement with a mounting location of an anchoring member used on occasion of anchoring of the metallic tubular body to a predetermined position on the automobile.

In the invention having the characteristics mentioned above, the anchoring member is utilized on the occasion of the metallic tubular body being anchored to the predetermined location on the automobile. Therefore, the high voltage recognition component can be anchored to the metallic tubular body without fail. Accordingly, fall of the high voltage recognition component from the metallic tubular body can be prevented.

### Advantageous Effects of Invention

In the invention described above, the high voltage recognition component to be retrofitted is used for letting the worker recognize that the wire harness includes a high voltage. Hence, the processing steps can be made simpler when compared with the related art. Moreover, there is yielded an advantage of the ability to achieve cost cutting and, by extension, quality enhancement.

In addition to yielding the advantage yielded by the above described invention, the invention yields the following additional advantages. Specifically, there is yielded an advantage of the ability to simplify a structure of the high voltage recognition component. Moreover, simplification of the structure also results in yielding an advantage of the ability to facilitate installation and another advantage of the ability to curtail cost.

In addition to yielding the advantage yielded by the above described invention, the invention yields the following additional advantage. Specifically, the high voltage recognition component is anchored by utilization of the anchoring member, so that there is yielded an advantage of the ability to prevent the high voltage recognition component from falling off from the metallic tubular body without fail.

### Brief Description of Drawings

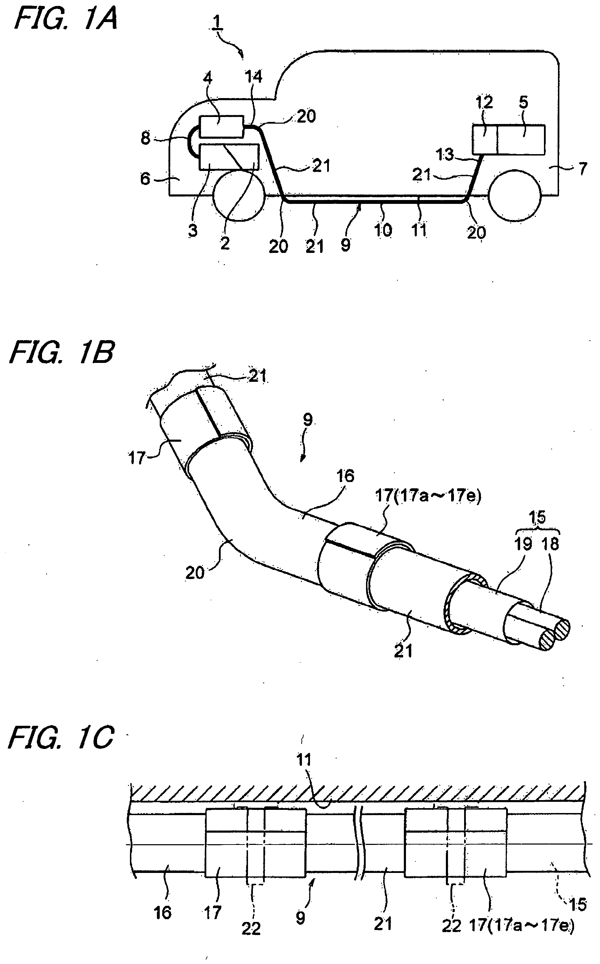

Figs. 1A to 1C are illustrations of a high voltage wire harness for use in an automobile of the invention, wherein Fig. 1A is a schematic diagram showing a routed state of a high voltage wire harness for use in an automobile, Fig. 1B is a perspective view showing that a high voltage recognition component is retrofitted to an exterior surface side of a metallic tubular body, and Fig. 1C is a side view showing a state in which the high voltage recognition component is retrofitted to the exterior surface side of the metallic tubular body;

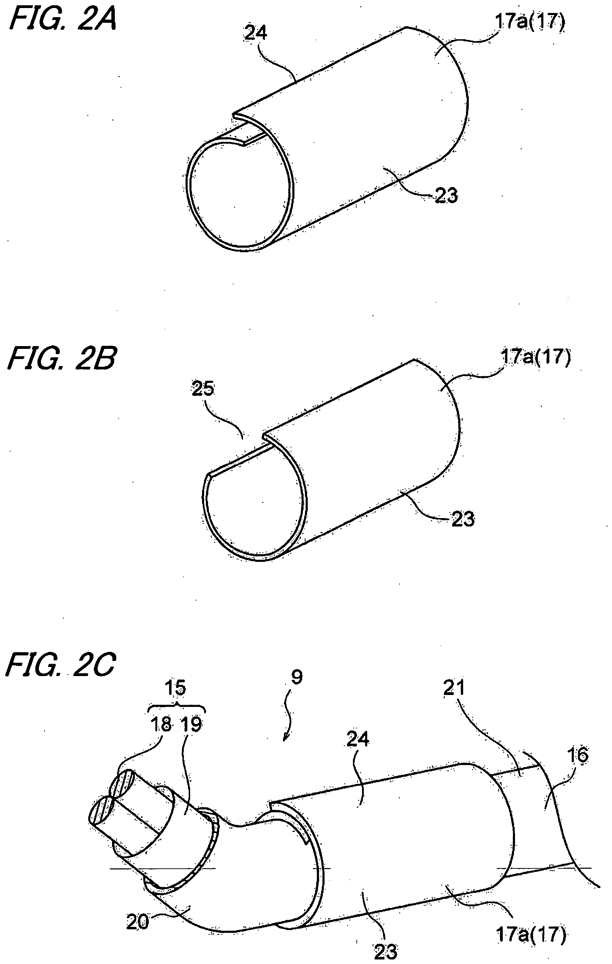

Figs. 2A to 2C are illustrations of a first explanatory example of the high voltage recognition component, not forming part of the invention, wherein Fig. 2A is a perspective view of the high voltage recognition component, Fig. 2B is a perspective view showing that the high voltage recognition component is opened when retrofitted, and Fig. 2C is a perspective view showing that the high voltage recognition component has been retrofitted;

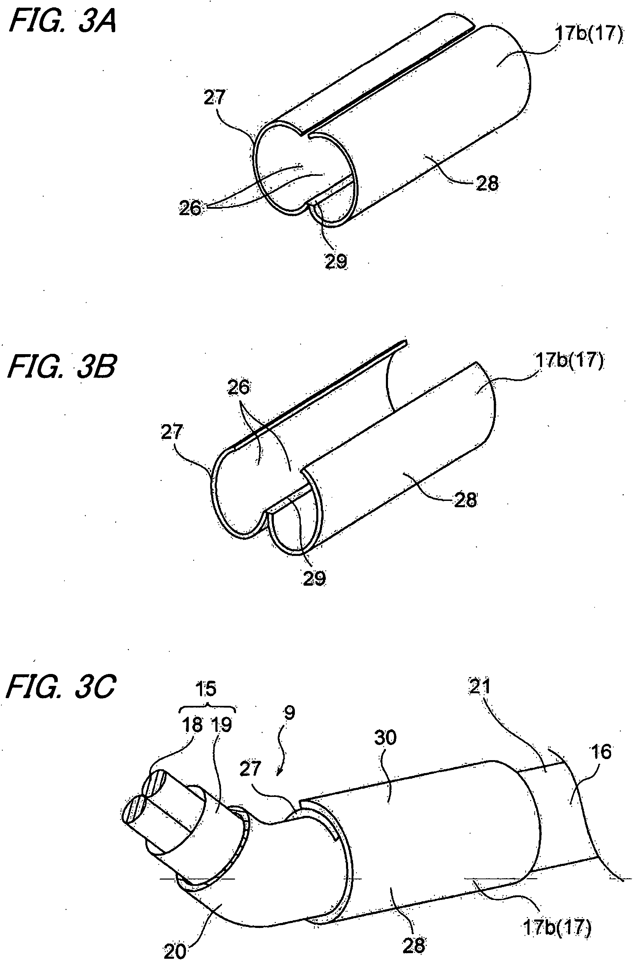

Figs. 3A to 3C are illustrations of a first specific example of the high voltage recognition component, wherein Fig. 3A is a perspective view of the high voltage recognition component, Fig. 3B is a perspective view showing that the high voltage recognition component is opened when retrofitted, and Fig. 3C is a perspective view showing that the high voltage recognition component has been retrofitted;

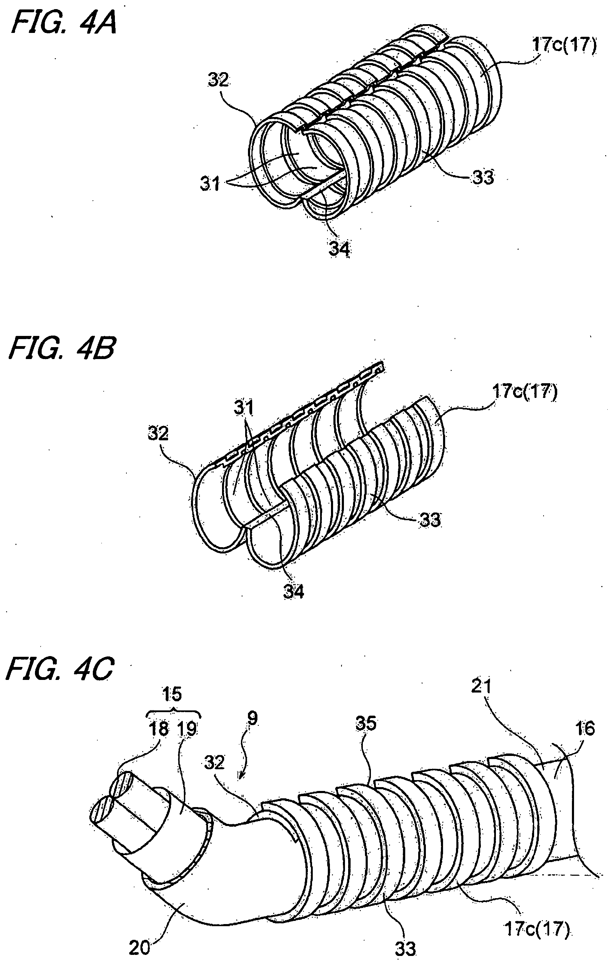

Figs. 4A to 4C are illustrations of a second specific example of the high voltage recognition component, wherein Fig. 4A is a perspective view of the high voltage recognition component, Fig. 4B is a perspective view showing that the high voltage recognition component is opened when retrofitted, and Fig. 4C is a perspective view showing that the high voltage recognition component has been retrofitted;

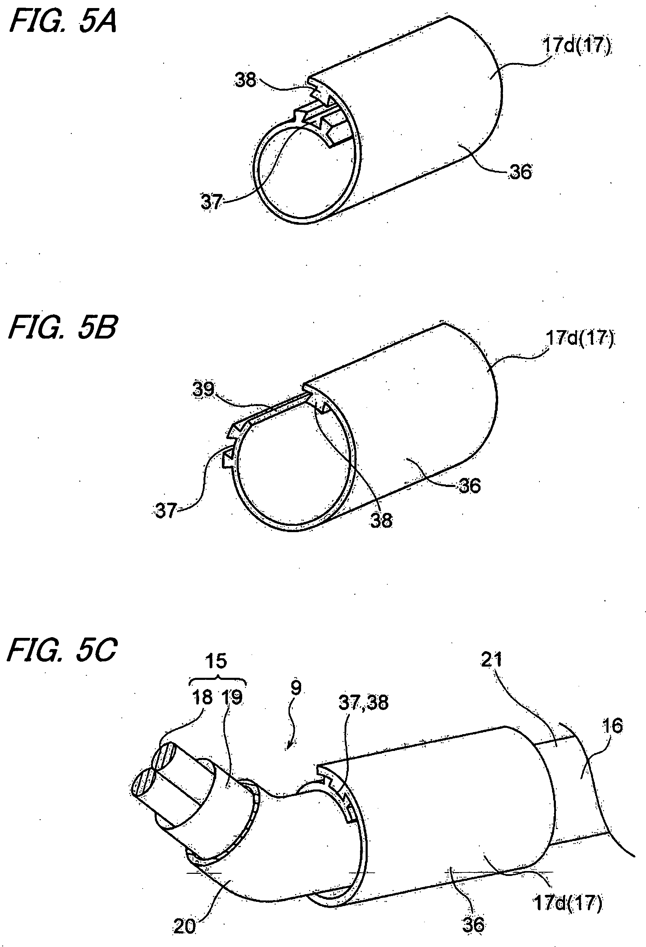

Figs. 5A to 5C are illustrations of a second explanatory specific example of the high voltage recognition component, not forming part of the invention, wherein Fig. 5A is a perspective view of the high voltage recognition component, Fig. 5B is a perspective view showing that the high voltage recognition component is opened when retrofitted, and Fig. 5C is a perspective view showing that the high voltage recognition component has been retrofitted; and

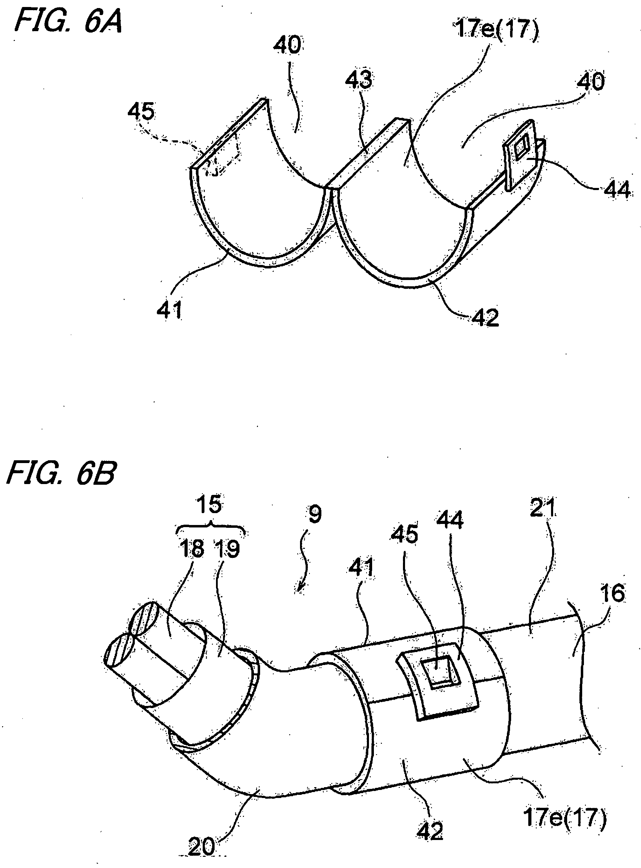

Figs. 6A and 6B are illustrations of a third explanatory example of the high voltage recognition component, not forming part of the invention, wherein Fig. 6A is a perspective view showing that the high voltage recognition component is opened when retrofitted, and Fig. 6B is a perspective view showing that the high voltage recognition component has been retrofitted.

### Description of Embodiment and explanatory examples

A high voltage wire harness for use in an automobile has one or a plurality of high voltage conductive paths and a metallic tubular body that is to act as an exterior cladding member for the high voltage conductive paths. A high voltage recognition component capable of awaking a worker to a fact that the wire harness includes a high voltage can be retrofitted to an exterior surface side of the metallic tubular body.

### [Embodiment]

An embodiment will be hereunder described by reference to the drawings. Figs. 1A to 1C are illustrations of the high voltage wire harness for use in an automobile of the invention. Fig. 1A is a schematic diagram showing a routed state of the high voltage wire harness for the automobile, Fig. 1B is a perspective view showing that the high voltage recognition component is retrofitted to the exterior surface side of the metallic tubular body, and Fig. 1C is a side view showing that the high voltage recognition component is retrofitted to the exterior surface side of the metallic tubular body. Further, Figs. 2A to 6B are illustrations of first and second specific example as well as of the first to third explanatory examples of the high voltage recognition component, wherein Figs. 2A, 3A, 4A and 5A are perspective views of the high voltage recognition component; Figs. 2B, 3B, 4B, 5B, and 6A are perspective views showing that the high voltage recognition component is opened on the occasion of retrofitting of the component, and Figs. 2C, 3C, 4C, 5C and 6B are perspective views showing that the high voltage recognition component has been retrofitted.

In the embodiment, explanations are provided to examples in which the wire harness according to the embodiment of the invention is adopted for a hybrid automobile; however, the wire harness can also be adopted for a pure electric vehicle or a common automobile.

In Figs. 1A to 1C, cited reference numeral 1 designates a hybrid automobile. The hybrid automobile 1 is a vehicle that is driven by mixing two power sources; i.e., an engine 2 and a motor unit 3. The motor unit 3 is supplied with electric power from a battery 5 (a battery pack) by way of an inverter unit 4. In the embodiment, the engine 2, the motor unit 3, and the inverter unit 4 are installed in an engine room 6 where front wheels are located. The battery 5 is installed in a rear portion 7 of the automobile where rear wheels are located (the battery may also be installed in a compartment room of the automobile that is situated behind the engine room 6).

The motor unit 3 and the inverter unit 4 are connected to each other by means of a known high voltage wire harness 8. The battery 5 and the inverter unit 4 are connected to each other by means of a wire harness 9 (a high voltage wire harness for an automobile) of the invention. The wire harness 9 is configured for use a high voltage purpose. An intermediate portion 10 of the wire harness 9 is routed on a ground side of a vehicle body underfloor portion 11. The wire harness 9 is routed substantially in parallel with the vehicle body underfloor portion 11. The vehicle body underfloor portion 11 is a so-called panel member that is a known body, and a through hole (its reference numeral is omitted) is formed at a predetermined location. The wire harness 9 is inserted into the through hole.

The wire harness 9 and the battery 5 are connected to each other by way of a junction block 12 provided in the battery 5. A rear end 13 of the wire harness 9 is electrically connected to the junction block 12 by means of a known method. A front end 14 of the wire harness 9 is electrically connected to the inverter unit 4 by means of a known method.

The motor unit 3 is assumed to include a motor and a generator. Moreover, the inverter unit 4 is assumed to include an inverter and a converter. The motor unit 3 is assumed to be formed as a motor assembly including a shielded case. The inverter unit 4 is also assumed to be formed as an inverter assembly including a shielded case. The battery 5 is assumed to be of Ni-MH-based type or Li-ion-based type and modularized. Further, an electric storage device; for instance, a capacitor, can also be used for the battery 5. Particular limitations are assumed not to be imposed on the battery 5, so long as the battery can be used for the hybrid automobile 1 or a pure electric vehicle.

First, the configuration and structure of the wire harness 9 are described.

The wire harness 9 is built from an electrically conductive path aggregate 15, a metallic tubular body 16 that is to act as an exterior cladding member of the electrically conductive path aggregate 15, and a plurality of high voltage recognition components 17 to be retrofitted to the metallic tubular body 16.

The electrically conductive path aggregate 15 (can additionally include a low voltage electric wire) is built from two high voltage electric wires 18 (high voltage conductive paths) and an electromagnetic shielding member 19 that collectively covers and shields the two high voltage electric wires 18. The high voltage electric wires 18 are high voltage conductive paths including a conductor and an insulator (a cladding) and formed so as to assume a length sufficient for electrical connection. The conductors are formed from copper, a copper alloy, aluminum, or an aluminum alloy. Further, the conductors are assumed to be either a conductor structure made by twisting wire cores or a rod-shaped conductor structure having a rectangular or round cross sectional profile (e.g., a conductor structure having a rectangular single core or a round single core, and an electric wire itself is rod-shaped in this case).

The high voltage electric wires 18 are formed from an unshielded electric wire. Terminals of the high voltage electric wires 18 are provided with a connector (omitted from the drawings).

Although the high voltage electric wires 18 are used in the embodiment, the embodiment is not limited to use of the high voltage electric wires. Specifically, a high voltage conductive path formed by providing a known busbar with an insulator can also be used. Further, there can also be used a high voltage conductive path formed by placing either a plus polarity conductor or a minus polarity conductor at a center, placing a first insulator outside the polarity conductor placed at the center, placing a remaining polarity conductor outside the first insulator, and placing a second insulator outside the remaining polarity conductor; namely, a coaxial high voltage conductive path that combines two high voltage conductive paths into a single high voltage conductive path (which can also be called a composite conductive path or composite electric wire, a coaxial composite conductive path or coaxial composite electric wire, or a coaxial conductive path or coaxial electric wire). Moreover, there can also be used a coaxial high voltage conductive path that combines three high voltage conductive paths into a single high voltage conductive path.

The electromagnetic shielding member 19 is an electromagnetic shielding member (a shielding member serving as measures against electromagnetic waves) covering the two high voltage electric wires 18 or a shielding member that includes conductive metallic foil or that is formed into a tubular shape from single metallic foil. The electromagnetic shielding member 19 is formed to a length that is substantially equal to an entire length of the two high voltage electric wires 18. The electromagnetic shielding member 19 is connected to the shielded case, or the like, of the inverter unit 4 by way of an unillustrated connector or directly.

Although the electromagnetic shielding member 19 includes metallic foil in the embodiment, the electromagnetic shielding member is not limited to metallic foil. Specifically, a braid including a plurality of ultrafine core wires, for instance, can be used, so long as the braid can serve as measures against electromagnetic waves. The braid is assumed to exhibit electrical conductivity and be woven into a tubular shape.

The electromagnetic shielding member 19 is installed due to the fact that the high voltage electric wires 18 are formed by the unshielded electric wires as mentioned above. When the high voltage electric wires 18 are shielded wires exhibiting an electromagnetic shielding function, the electromagnetic shielding member 19 is not limited to the configuration.

The metallic tubular body 16 is a metallic tubular body and formed so as to assume a length necessary to accommodate the electrically conductive path aggregate 15. In the embodiment, the metallic tubular body 16 is assumed to be formed into a circular cross sectional profile (the cross sectional profile is assumed to be a mere example, and the cross sectional profile can also assume an ellipsoidal shape, an oval shape, or a rectangular shape). Such a metallic tubular body 16 is assumed to be bent in conformity with the routing path.

In the embodiment, an aluminum pipe member assuming a circular cross sectional profile is used as the metallic tubular body 16 (the metallic tubular body is not limited to aluminum and is assumed not to be limited to any specific material, so long as the tubular body is made of metal). The metallic tubular body 16 is formed to an inner diameter that enables accommodation of the electrically conductive path aggregate 15. The metallic tubular body 16 is bent so as to form a bend 20 by use of; for instance, an unillustrated bender machine after the electrically conductive path aggregate 15 has been accommodated. The wire harness 9 is held in the form of a route conforming to the shape of the routing path.

The bend 20 is formed in a plurality of locations. Moreover, a portion of the metallic tubular body 16 other than the bends 20 is formed as a linear portion 21.

The high voltage recognition component 17 is provided as means for letting a worker recognize that the wire harness includes a high voltage (since the wire harness 9 is equipped with the high voltage electric wires 18, means for awaking the worker to this fact are necessary). A material itself of the high voltage recognition component 17 is colored in orange in order to show that the wire harness includes a high voltage. The high voltage recognition component 17 is formed such that it can be retrofitted to an exterior surface side of the metallic tubular body 16 so that the high voltage recognition component 17 can be installed after treatment of the metallic tubular body 16. Specifically, the high voltage recognition component 17 is formed so as to be able to be retrofitted (the high voltage recognition component 17 is also assumed to be capable of being installed before treatment. The high voltage recognition component can be installed before, so long as it does not hinder treatment).

The high voltage recognition component 17 is assumed to be installed on the linear portion 21 except the bends 20. The reason for this is to prevent the shape of the high voltage recognition component 17 from being affected by the shape of the bends of the metallic tubular body 16. The high voltage recognition component 17 is formed to a length that enables installation of one or a plurality of high voltage recognition components to the linear portion 21. When the high voltage recognition component 17 has a short length, there is pointed as an example in which the high voltage recognition components are installed at an interval of about; for instance, 100 mm.

So long as the high voltage recognition component 17 enables a worker to recognize that the wire harness includes a high voltage at the sight of the entirety of the wire harness 9, there is no necessity to install one high voltage recognition component 17 to the linear portion 21. Moreover, when the linear portion 21 is short, the high voltage recognition component 17 is not installed, so long as the high voltage recognition component 17 enables the worker to recognize at another portion of the wire harness that the wire harness includes a high voltage. In short, not all of the linear portion 21 needs to be an object of installation of the high voltage recognition component.

The high voltage recognition component 17 is formed so as to be wrapped around the metallic tubular body 16 in a direction of an outer periphery and so as not to fall from the metallic tubular body 16 (a specific shape will be described later by reference to Figs. 2A to 6B). The shape that enables wrapping of the high voltage recognition component around the metallic tubular body 16 in the direction of the outer periphery naturally makes the high voltage recognition component difficult to fall. An example shape that makes the high voltage recognition component more difficult to fall without fail is utilization of an anchoring member 22 (e.g., a clamp) used for anchoring the metallic tubular body 16 to the vehicle body underfloor portion 11 (the high voltage recognition component is interposed between the metallic tubular body 16 and the anchoring member 22). In this case, the high voltage recognition component 17 is assumed to be placed in agreement with a mounting position of the anchoring member 22. In relation to preventing the high voltage recognition component from falling, an engagement portion for preventing fall-off (which will be described later) can also be formed in the high voltage recognition component 17.

When the high voltage recognition component 17 is formed in a shape that enables wrapping of the high voltage recognition component around the metallic tubular body 16 in the direction of its outer periphery, installation of the high voltage recognition component naturally becomes easy.

The high voltage recognition component 17 is made of a resin, and a resin material includes polyethylene (PE), polypropylene (PP), polyvinyl chloride (PVC), polyethylene terephthalate (PET), and others. Although the high voltage recognition component 17 is not limited to a specific material, a material that can be subjected to extrusion molding or that can be used while cut to a predetermined length is preferable in view of cost, productivity, or versatility.

Specific examples (first through fifth specific examples) of the high voltage recognition component 17 are now described by reference to Figs. 2A to 6B.

In Figs. 2A to 2C, a high voltage recognition component 17a that is to serve as a first explanatory example is formed by cutting an orange-colored sheet-like or film-like material made of resin into a predetermined length. In order to form the high voltage recognition component 17a into a shape that enables wrapping of the high voltage recognition component 17a around the metallic tubular body 16 in the direction of its outer periphery and that prevents the high voltage recognition component 17a from falling off from the metallic tubular body 16, the high voltage recognition component 17a is equipped with an entirely rounded curling section 23 and an overlap 24 where side edges overlap each other.

The high voltage recognition component 17a exhibits flexibility. The high voltage recognition component 17a is also formed so as to be very light.

Side edges of the high voltage recognition component 17a are opened, to thus make an installation space 25. The high voltage recognition component 17a is pushed toward the linear portion 21 by way of the installation space 25, whereby retrofitting of the high voltage recognition component to the metallic tubular body 16 is completed. Force for returning to an original state from an open state acts on the overlap 24, so that a wrap of the high voltage recognition component 17a around the linear portion 21 is thereby maintained.

The high voltage recognition component 17a will not fall off unless force for broadening the side edges of the high voltage recognition component 17a in excess of a diameter of the metallic tubular body 16 acts on the high voltage recognition component 17a.

In Figs. 3A to 3C, a high voltage recognition component 17b that is to serve as a first specific example is formed by extrusion molding of an orange-colored resin and cutting the thus-molded article to a predetermined length (the high voltage recognition component 17b is also assumed to be formed to a predetermined length by injection molding). In order to form the high voltage recognition component 17b into a shape that enables wrapping of the high voltage recognition component 17b around the metallic tubular body 16 in the direction of its outer periphery and that prevents the high voltage recognition component 17b from falling off from the metallic tubular body 16, the high voltage recognition component 17b is formed as illustrated.

Specifically, the high voltage recognition component 17b has C-shaped tubular portions 27 and 28 that form installation openings 26 and a hinge 29 that connects the C-shaped tubular portions 27 and 28 to each other. The high voltage recognition component 17b is formed in such a shape as to assume a tubular shape and cause an overlap 30 when installed on the linear portion 21 of the metallic tubular body 16. The high voltage recognition component 17b is formed into a shape that is larger than its counterpart described in connection with the first explanatory example in terms of a thickness and rigidity.

Retrofitting of the high voltage recognition component 17b to the metallic tubular body 16 is completed by means of opening the installation opening 26 of the C-shaped tubular portion 27, pushing the C-shaped tubular portion 27 to the linear portion 21 of the metallic tubular body 16 by way of the thus-broadened installation opening 26, subsequently broadening the installation opening 26 of the C-shaped tubular body 28, and pushing the C-shaped tubular portion 28 to the linear portion 21 by way of the thus-broadened installation opening 26. Force for returning from an open state to an original state develops in the C-shaped tubular portion 28, thereby maintaining the overlap 30 wrapped around the linear portion 21.

The high voltage recognition component 17b will not fall off unless force that will broaden the installation openings 26 of the respective C-shaped tubular portions 27 and 28 acts on the high voltage recognition component 17b.

In Figs. 4A to 4C, a high voltage recognition component 17c that is to serve as a second specific example is realized by forming the first specific example into the shape of a substantially corrugated tube and basically yields the same advantage as that yielded by the first specific example (the second specific example is slightly different from the first specific example in terms of a working effect, and this will be described later).

The high voltage recognition component 17c has C-shaped tubular portions 32 and 33 that are to form installation openings 31 and a hinge 34 that connects the C-shaped tubular portions 32 and 33 to each other. The high voltage recognition component 17c is formed into such a shape as to form a corrugated tube and cause an overlap 35 when installed on the linear portion 21 of the metallic tubular body 16.

The overlap 35 of the high voltage recognition component 17c is formed as a portion that exhibits the following working effect when compared with the overlap 30 shown in Fig. 3A to Fig. 3C. Specifically, the high voltage recognition component 17c has the C-shaped tubular portions 32 and 33 that are shaped so as to form a corrugated tube. Accordingly, when the high voltage recognition component 17c is retrofitted so as to wrap the linear portion 21 of the metallic tubular body 16, a surface of a corrugated raise of the C-shaped tubular portion 32 enters a back side of a corrugated raise of the C-shaped tubular portion 33 with appropriate friction. Further, a surface of a corrugated valley of the C-shaped tubular portion 32 enters a back side of a corrugated valley of the other C-shaped tubular portion 33 with appropriate friction. When the surface is pushed further, whereby entry of the surface is made larger. Thus, the high voltage recognition component is formed as a portion that enhances engagement strength with friction. Accordingly, wrapping of the high voltage recognition component around the linear portion 21 is maintained.

The high voltage recognition component 17c will not fall off unless force for releasing the C-shaped tubular portions 32 and 33 from the entered state acts on the high voltage recognition component 17c.

In Figs. 5A to 5C, a high voltage recognition component 17d that is to serve as a second explanatory example is formed by cutting a sheet-like article, which is formed from a resin and which is colored in orange, to a predetermined length (the high voltage recognition component 17d is also assumed to be formed to a predetermined length by injection molding). The high voltage recognition component 17d exhibits flexibility despite its thickness. In order to form the high voltage recognition component 17d into a shape that enables wrapping of the high voltage recognition component 17d around the metallic tubular body 16 in the direction of its outer periphery and that prevents the high voltage recognition component 17d from falling off from the metallic tubular body 16, the high voltage recognition component 17d is formed so as to include an entirely rounded curling section 36 and engagement portions 37 and 38 by means of which side edges of the high voltage recognition component 17d are engaged with each other.

Side edges of the high voltage recognition component 17d are opened, to thus make an installation space 39. The high voltage recognition component 17d is pushed toward the linear portion 21 by way of the installation space 39, and the engagement portions 37 and 38 are engaged with each other. Retrofitting of the high voltage recognition component to the metallic tubular body 16 is thereby completed. As a result of the engagement portions 37 and 38 being engaged with each other, a lock state is achieved, so that wrapping of the high voltage recognition component 17d around the linear portion 21 is maintained. An illustrated shape of the engagement portions 37 and 38 is taken as an example.

The high voltage recognition component 17d will not fall off unless the high voltage recognition component 17d is released from a locked state and unless force for broadening the side edges of the high voltage recognition component 17d in excess of a diameter of the metallic tubular body 16 acts on the high voltage recognition component 17d.

In Figs. 6A and 6B, a high voltage recognition component 17e that is to serve as a third explanatory example is a resin-molded article, colored in orange, and formed so as to become shorter than its counterparts described in connection with the specific examples. In order to form the high voltage recognition component 17e into a shape that enables wrapping of the high voltage recognition component 17e around the tubular metallic body 16 in the direction of its outer periphery and that prevents the high voltage recognition component 17e from falling off from the metallic tubular body 16, the high voltage recognition component 17e is formed substantially into a shape of eyeglasses or a clamp, such as those as illustrated.

Specifically, the high voltage recognition component 17e has C-shaped curved portions 41 and 42 that form installation openings 40, a hinge 43 that connects the C-shaped curved portions 41 and 42 to each other, and engagement portions 44 and 45 for engaging side edges of the C-shaped curved portions 41 and 42 with each other. The high voltage recognition component 17e is formed in such a shape as to assume a ring shape when installed on the linear portion 21 of the metallic tubular body 16.

Retrofitting of the high voltage recognition component 17e to the metallic tubular body 16 is completed by means of engaging the engagement portions 44 and 45 so as to surround the linear portion 21 at the C-shaped curved portions 41 and 42. The engagement portions 44 and 45 are brought into a locked state by means of engagement; hence, wrapping of the high voltage recognition component 17e around the linear portion 21 is thereby maintained.

The high voltage recognition component 17e will not fall off unless the high voltage recognition component 17e is released from the locked state.

In the invention, as has been described thus far by reference to Figs. 1A to 6B, the high voltage recognition component 17 (17a to 17e) is retrofitted to the exterior surface side of the metallic tubular body 16 for letting the worker recognize that the wire harness 9 includes a high voltage. So long as the high voltage recognition component 17 to be retrofitted is used as has been described in connection with the invention, the high voltage recognition component 17 can be attached after the metallic tubular body 16 has been bent.

By using the high voltage recognition component 17 to be retrofitted as described in connection with the invention, it is possible to omit paint of the metallic tubular body 16 intended for letting the worker recognize that the wire harness includes a high voltage.

The invention makes it possible to dramatically simplify the treatment steps for letting the worker recognize that the wire harness includes a high voltage when compared with the existing techniques. Moreover, cost cutting and quality enhancement can thereby be accomplished.

### Industrial Applicability

The present invention is useful for providing a high voltage wire harness for use in an automobile which is intended for awaking a worker to the fact that the wire harness includes a high voltage and which enables simplification of the processing steps, cost cutting, and quality enhancement.

### Reference Signs List

1 ... HYBRID AUTOMOBILE (CAR), 2 ... ENGINE, 3 ... MOTOR UNIT, 4 ... INVERTER UNIT, 5 ... BATTERY, 6 ... ENGINE ROOM, 7 ... REAR PORTION OF AUTOMOBILE, 8 ... HIGH VOLTAGE WIRE HARNESS, 9 ... WIRE HARNESS (HIGH VOLTAGE WIRE HARNESS FOR USE IN AUTOMOBILE), 10 ... MIDDLE PORTION, 11 ... VEHICLE BODY UNDERFLOOR PORTION, 12 ... JUNCTION BLOCK, 13 ... REAR END, 14 ... FRONT END, 15 ... ELECTRICALLY CONDUCTIVE AGGREGATE, 16 ... METALLIC TUBULAR BODY, 17, 17a TO 17e ... HIGH VOLTAGE RECOGNITION COMPONENT, 18 ... HIGH VOLTAGE ELECTRIC WIRE (HIGH VOLTAGE CONDUCTIVE PATH), 19 ... ELECTROMAGNETIC SHIELDING MEMBER, 20 ... BEND, 21 ... LINEAR PORTION, 22 ... ANCHORING MEMBER, 23 ... CURLING SECTION, 24 ... OVERLAP, 25 ... INSTALLATION SPACE, 26, 31 ... INSTALLATION OPENING, 27, 32 ... C-SHAPED TUBULAR PORTION, 28, 33 ... OTHER C-SHAPED TUBULAR PORTION, 29, 34 ... HINGE, 30, 35 ... OVERLAP, 36 ... CURLING SECTION, 37, 38 ... ENGAGEMENT PORTION, 39 ... INSTALLATION SPACE, 40 ... INSTALLATION OPENING, 41 ... C-SHAPED CURVED PORTION, 42 ... OTHER C-SHAPED CURVED PORTION, 43 ... HINGE, 44, 45 ... ENGAGEMENT PORTION

## Claims

1. A high voltage wire harness (9) for use in an automobile comprising:
one or a plurality of high voltage conductive paths (18) routed in an automobile; and
a metallic tubular body (16) made of aluminum adapted to serve as an exterior cladding member for the high voltage conductive paths (18),
a high voltage recognition component (17) capable of letting a worker recognize that the wire harness (9) includes a high voltage
**characterized in that**
the high voltage recognition component (17b,17c) is retrofitted to an exterior surface side of the metallic tubular body and includes a configuration of either of the following (i) or (ii):
(i) the high voltage recognition component (17b) has C-shaped tubular portions (27 and 28) that form installation openings (26) and a hinge (29) that connects the C-shaped tubular portions (27 and 28) to each other, and the high voltage recognition component (17b) is formed by extrusion molding of an orange-colored resin and cutting the thus-molded article to a predetermined length in such a shape as to assume a tubular shape and cause an overlap (30) when installed on the metallic tubular body (16):
(ii) the high voltage recognition component (17c) has C-shaped tubular portions (32 and 33) that are to form installation openings (31) and a hinge (34) that connects the C-shaped tubular portions (32 and 33) to each other, and the high voltage recognition component (17c) is made of orange-colored resin and is formed into such a shape as to form a corrugated tube and cause an overlap (35) when installed on the metallic tubular body (16).

2. The high voltage wire harness (9) for use in an automobile according to claim 1, wherein the metallic tubular body (16) is bent, to form bends (20) and a linear portion (21); and the high voltage recognition component (17) is retrofitted to the linear portion (21).

3. The high voltage wire harness (9) for use in an automobile according to claim 1 or 2, wherein the high voltage recognition component (17) is placed in agreement with a mounting location of an anchoring member (22) used on occasion of anchoring of the metallic tubular body (16) to a predetermined position on the automobile.

## Patentansprüche

1. Hochspannungs-Kabelbaum (9) zur Verwendung in einem Kraftfahrzeug, umfassend:
eine oder mehrere Hochspannungsleiterbahnen (18), die in einem Kraftfahrzeug verlegt sind; und
ein rohrförmiger Metallkörper (16) aus Aluminium, der angepasst ist, um als ein äußeres Ummantelungselement für die Hochspannungsleiterbahnen (18) zu dienen,
eine Hochspannungserkennungskomponente (17), die einen Arbeiter erkennen lässt, dass der Kabelbaum (9) eine hohe Spannung aufweist,
**dadurch gekennzeichnet, dass**
die Hochspannungserkennungskomponente (17b, 17c) an einer Außenflächenseite des rohrförmigen Metallkörpers nachgerüstet ist und eine der folgenden Konfigurationen (i) oder (ii) aufweist:
(i) die Hochspannungserkennungskomponente (17b) weist C-förmige rohrförmige Abschnitte (27 und 28) auf, die Installationsöffnungen (26) und ein Gelenk (29) bilden, das die C-förmigen rohrförmigen Abschnitte (27 und 28) miteinander verbindet, und die Hochspannungserkennungskomponente (17b) wird durch Extrusionsformen eines orangefarbenen Harzes und Schneiden des so geformten Gegenstandes auf eine vorbestimmte Länge in einer solchen Form ausgebildet, dass sie eine rohrförmige Form annimmt und eine Überlappung (30) bewirkt, wenn sie auf dem rohrförmigen Metallkörper (16) befestigt ist;
(ii) die Hochspannungserkennungskomponente (17c) weist C-förmige rohrförmige Abschnitte (32 und 33) auf, die Installationsöffnungen (31) und ein Gelenk (34) bilden, das die C-förmigen rohrförmigen Abschnitte (32 und 33) verbindet, und die Hochspannungserkennungskomponente (17c) ist aus einem orangefarbenen Harz hergestellt und in einer solchen Form ausgebildet, dass sie ein gewelltes Rohr bildet und eine Überlappung (35) bewirkt, wenn sie auf dem rohrförmigen Metallkörper (16) befestigt ist.

2. Hochspannungs-Kabelbaum (9) zur Verwendung in einem Kraftfahrzeug nach Anspruch 1, wobei
der rohrförmige Metallkörper (16) gebogen ist, um Biegungen (20) und einen linearen Abschnitt (21) zu bilden; und
die Hochspannungserkennungskomponente (17) an dem linearen Abschnitt (21) nachgerüstet ist.

3. Hochspannungs-Kabelbaum (9) zur Verwendung in einem Kraftfahrzeug nach Anspruch 1 oder 2, wobei die Hochspannungserkennungskomponente (17) in Übereinstimmung mit einer Befestigungsposition eines Verankerungselements (22) angeordnet ist, das anlässlich der Verankerung des rohrförmigen Metallkörpers (16) an einer vorbestimmten Position am Kraftfahrzeug verwendet wird.

## Revendications

1. Faisceau de câbles haute tension (9) destiné à être utilisé dans une automobile comprenant :
un ou une pluralité de trajets conducteurs haute tension (18) acheminés dans une automobile ; et
un corps tubulaire métallique (16) constitué d'aluminium adapté pour servir d'élément de gainage extérieur pour les trajets conducteurs haute tension (18),
un composant de reconnaissance de haute tension (17) capable de laisser un travailleur reconnaître que le faisceau de câbles (9) comprend une haute tension **caractérisé en ce que**
le composant de reconnaissance de haute tension (17b, 17c) est réajusté sur un côté de surface extérieure du corps tubulaire métallique et comprend une configuration parmi l'une des suivantes (i) ou (ii) :
(i) le composant de reconnaissance de haute tension (17b) a des parties tubulaires en forme de C (27 et 28) qui forment des ouvertures d'installation (26) et une charnière (29) qui relie les parties tubulaires en forme de C (27 et 28) l'une à l'autre, et le composant de reconnaissance de haute tension (17b) est formé par moulage par extrusion d'une résine de couleur orange et par découpe de l'article ainsi moulé à une longueur prédéterminée dans une forme telle qu'il adopte une forme tubulaire et provoque un chevauchement (30) lorsqu'il est installé sur le corps tubulaire métallique (16) :
(ii) le composant de reconnaissance de haute tension (17c) a des parties tubulaires en forme de C (32 et 33) destinées à former des ouvertures d'installation (31) et une charnière (34) reliant les parties tubulaires en forme de C (32 et 33) l'une à l'autre, et le composant de reconnaissance de haute tension (17c) est constitué d'une résine de couleur orange et est formé en une forme telle qu'il forme un tube ondulé et provoque un chevauchement (35) lorsqu'il est installé sur le corps tubulaire métallique (16).

2. Faisceau de câbles haute tension (9) destiné à être utilisé dans une automobile selon la revendication 1, dans lequel le corps tubulaire métallique (16) est courbé pour former des courbures (20) et une partie linéaire (21); et le composant de reconnaissance de haute tension (17) est réajusté sur la partie linéaire (21).

3. Faisceau de câbles haute tension (9) destiné à être utilisé dans une automobile selon la revendication 1 ou 2, dans lequel le composant de reconnaissance de haute tension (17) est placé conformément à un emplacement de montage d'un élément d'ancrage (22) utilisé à l'occasion d'un ancrage du corps tubulaire métallique (16) à une position prédéterminée sur l'automobile.
